# EUROPEAN PATENT SPECIFICATION

(11) **EP 3 372 782 B1**
(45) Date of publication and mention of the grant of the patent: **18.03.2020**
(21) Application number: 18169121.3
(22) Date of filing: 15.07.2015
(51) Int. Cl.: F01D 1/18, F01D 1/24, F01D 9/06, F01D 5/14, F01D 25/16, F01D 1/20, F01D 1/26, F02K 3/072, F02C 3/04

(54) **VANELESS COUNTERROTATING TURBINE**
GEGENLÄUFIGE TURBINEN MIT SCHAUFELLOSEM ZWISCHENKANAL
TURBINES CONTRAROTATIVES AVEC CONDUIT INTERMÉDIAIRE SANS AILETTES

(30) Priority: 15.07.2014 US 201462024659 P
(43) Date of publication of application: 12.09.2018
(62) Divisional of application: 15176856.1
(73) Proprietor: United Technologies Corporation, Farmington, CT 06032 (US)
(72) Inventor: ROBERGE, Gary D., Tolland, CT 06084 (US)
(74) Representative: Dehns

(56) References cited:
- EP-A1- 1 533 473
- DE-A1- 3 842 962
- US-A- 3 703 081
- US-A- 4 916 894
- US-A1- 2005 241 292
- US-A1- 2008 098 716

## Description

### TECHNICAL FIELD

The present disclosure relates generally to gas turbine engines, and more particular to vaneless turbine section configurations for the same.

### BACKGROUND

Gas turbine engines for use in commercial aircraft include a compressor section that compresses air and provides the compressed air to a combustor along a primary fluid flowpath. The combustor receives fuel from an aircraft fuel system and ignites a mixture of fuel and compressed air. The combustion gasses resultant from the combustion are passed through a turbine section of the gas turbine engine, and drive stages within the turbine section to rotate. Each of the stages is connected to a shaft, and rotation of the turbine stages in turn drives rotation of the shaft.

The turbine section is divided into at least two sequential turbine portions, with combustion gasses flowing through the second turbine portion being at a lower pressure than combustion gasses flowing through the first turbine portion. The first turbine portion is connected to a first shaft and drives at least a high pressure portion of the compressor section. The second turbine portion is connected to a second shaft and drives at least a low pressure portion of the compressor section. The second shaft is positioned radially inward of the first shaft.

As the combustion gasses transition from the first turbine portion to the second turbine portion through a transition duct, exit swirl from the last airfoil in the first turbine portion can cause undesirable flow characteristics on the combustion gasses. In order to correct the flow characteristics, the transition duct between turbine sections in a typical gas turbine engine will include at least one flow correcting vane. The flow correcting vane in these examples has a cross section profile designed to counter the exit swirl of the last airfoil in the first turbine portion according to known principles.

US 2005/241292, DE 3842962, and US 2008/098716 relate to the background of the present disclosure and may be useful in understanding the present invention.

### SUMMARY OF THE INVENTION

The present invention provides a gas turbine engine according to claim 1.

In a further embodiment of any of the previous examples, a first of the revolving races is mechanically connected to the first shaft.

In a further embodiment of any of the previous examples, a second of the revolving races is mechanically connected to the second shaft

In a further embodiment of any of the previous examples, a static support structure is disposed between the first stage of the second turbine section and a second stage of the second turbine section.

In a further embodiment of any of the previous examples, the static support structure is directly connected to an outer diameter of the primary flowpath and the static support structure is connected to a second shaft via a bearing.

A further embodiment of the previous example, includes a turbine exhaust case connected to a fluid exit of the second turbine portion.

In a further embodiment of any of the previous examples, the turbine exhaust case is supported relative to a second shaft via at least a first support wall and a bearing.

These and other features of the present invention can be best understood from the following specification and drawings, the following of which is a brief description.

### BRIEF DESCRIPTION OF THE DRAWINGS

Figure 1 schematically illustrates an exemplary gas turbine engine.
Figure 2 schematically illustrates a first example turbine section.
Figure 2A schematically illustrates a cross sectional view of a portion of Figure 2.
Figure 3 schematically illustrates a second example turbine section.
Figure 3A schematically illustrates a cross sectional view of a portion of Figure 3.
Figure 4 schematically illustrates an alternate configuration of the second example turbine section.

### DETAILED DESCRIPTION OF AN EMBODIMENT

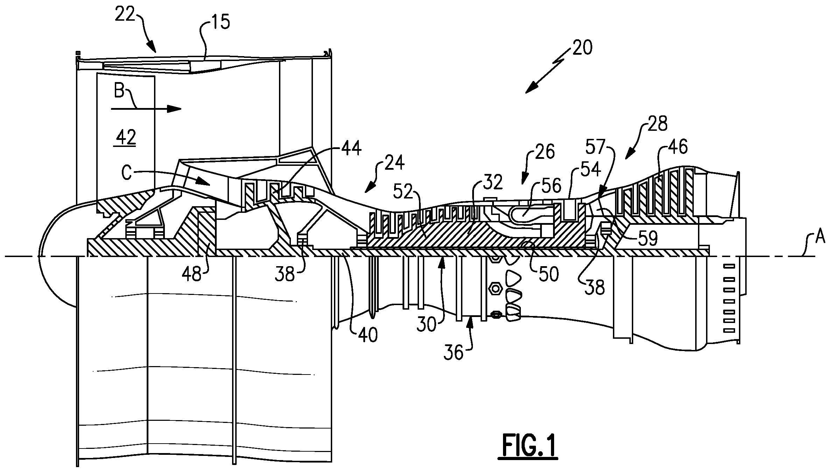

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10668 m). The flight condition of 0.8 Mach and 35,000 ft (10668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]0.5. The "Low corrected fan tip speed" as disclosed herein according to one non-limiting embodiment is less than about 1150 ft / second (350.5 m / s).

In some example gas turbine engines 20, the low pressure turbine 56 rotates at a speed that is approximately 40-50% or higher of the rotational speed of the high pressure turbine 54. In other examples, the low pressure turbine rotational speed can be even closer to the high pressure turbine rotational speed. A low pressure turbine 56 operating in this speed range is referred to as a high speed low turbine. The high speed low turbine in engine 20 is enabled by the use of a geared architecture that drives a fan at a desired lower speed than the rotational speed of the low turbine.

The radius of the high spool and low spool turbine modules, when designed to rotate at substantially similar speeds, enables the utilization of radially similar low and high spool turbines. That is to say, the radial distances of the flowpath through both the last stage of the high spool turbine and first stage of the low spool turbine from an engine axis are similar. The reduced radial differences, as compared with typical designs having larger radial difference between turbine modules, provides more optimal flow characteristics through the engine core.

A further result of the radially similar low and high spool turbines is a reduced length of a transition duct connecting the flowpaths of the low and high spool turbines. As a result of the reduced length of the transition duct and counterrotating nature of the two turbine modules, the rotors in the first stage of the low spool turbine are sufficient to provide flow correction to the gasses traveling from the high spool turbine to the low spool turbine, and no static flow correcting vanes are required within the transition duct. Due to the absence of flow correcting vanes within the transition duct, the transition duct is referred to as being "vaneless". In a turbine engine including a vaneless transition duct, the last spinning blade on the high pressure turbine 54 directly feeds combustion gas products into a counterrotating low pressure turbine 56 inlet.

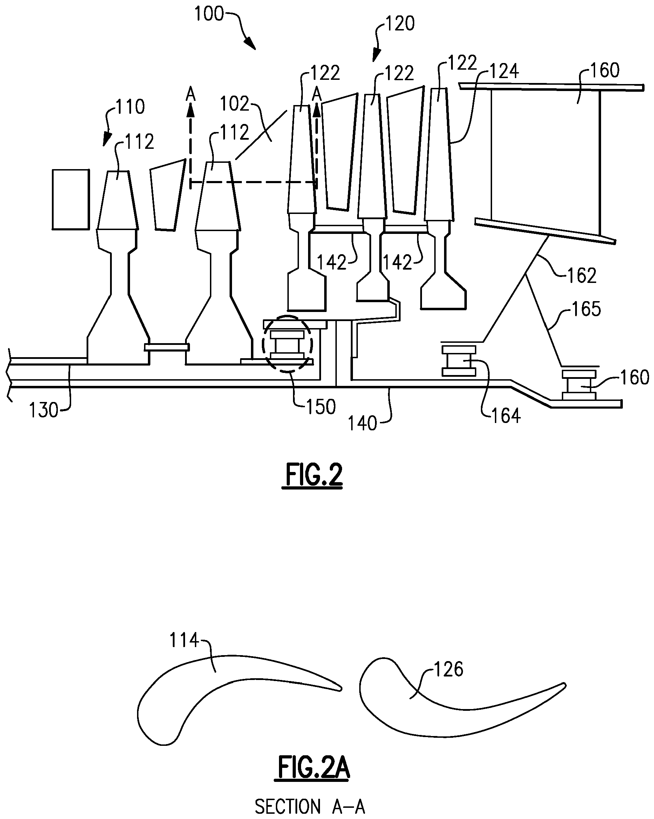

Figure 2 illustrates an example turbine section 100, such as could be utilized as the turbine section 28 of the example of Figure 1. The example turbine section 100 includes a first turbine portion 110 and a second turbine portion 120 connected by a transition duct 102. Fluid flowing through the first turbine portion 110 is at a high pressure relative to fluid flowing through the second turbine portion 120. Each turbine portion 110, 120 includes multiple sets of rotors 112, 122, with each set of rotors 112, 122 being a stage of the corresponding turbine portion 110, 120.

The rotors 112 in the first turbine portion or high pressure turbine 110 are connected to a first shaft 130, and drive the first shaft 130 to rotate as combustion gasses are expanded and reacted through the turbine 110. Similarly, the rotors 122 in the second portion or low pressure turbine are connected to a second shaft 140, and drive the second shaft 140 to rotate as combustion gasses are further expanded and reacted through the second turbine 120. Each of the rotors 122 in the second portion 120 are connected to each other via mechanically fastened or bonded joints in disk arms 142, and only a single stage of the rotors 122 is connected to the second shaft 140. In the illustrated example, the connected rotors 122 are the rotors 122 in the aftmost stage. The first and second shaft 130, 140 are supported relative to each other via a "piggy back" intershaft bearing arrangement 150. While the first stage turbine 110 is illustrated herein as having two stages and second turbine portion 120 is illustrated herein as having three stages, it is understood that additional stages may be included depending on the needs of a particular gas turbine engine. In alternative examples, the high pressure turbine section 54 is "overhung" using a bearing support in a diffuser or combustor case.

Positioned at a flowpath exit 124 of the turbine section 100 is a turbine exhaust case 160. The exhaust case 160 includes an outer diameter ring, inner diameter ring and intermittent local struts bridging flowpath from the inner diameter to the outer diameter. The turbine exhaust case 160 directs exhaust gasses from the turbine section 100 away from the gas turbine engine 20 and provides a structural support for the low shaft rotor bearing load. The turbine exhaust case 160 is supported by a turbine exhaust case mounted bearing support 162, and a bearing 164. In some example engines, the turbine exhaust case requires an additional optional support wall 165, and a second bearing support 166.

The first turbine portion 110 rotates about an engine axis in a first direction, while the second turbine portion 120 rotates in the opposite direction. Figure 2A illustrates a cross sectional view of the last rotor stage 112 of the first turbine portion and the first rotor stage 122 of the second turbine portion. One of skill in the art, having the benefit of this disclosure, will understand that the airfoil profiles 114 of the rotors 112 in the first turbine portion 110 are generally opposite the airfoil profiles 126 of the rotors 122 in the second turbine portion 120. The opposing airfoil profiles 114, 126 drives the turbine portions 110, 120 to counter rotate.

In some example gas turbine engines, additional structural support is need to support the turbine rotors and/or the structures defining the fluid flowpath, and/or the engine case surrounding the turbine section. In such an example, a static support structure is included in the turbine section to provide the support.

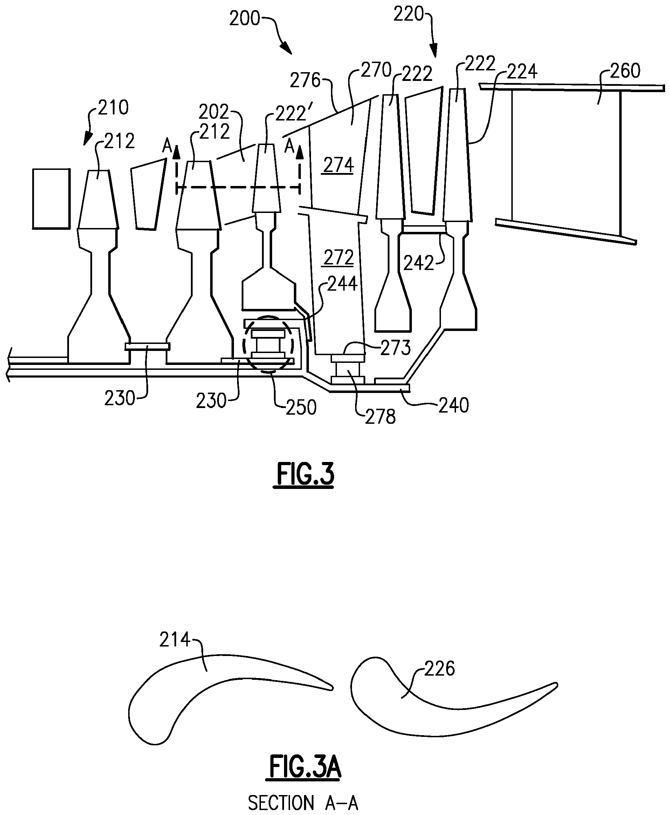

With continued reference to Figures 1, 2 and 2A, and with like numerals indicating like elements, Figure 3 illustrates a turbine section 200 including a static structural support 270. As with the example of Figure 2, the example turbine section 200 includes a first turbine portion 210 and a second turbine portion 220 connected by a transition duct 202. Fluid flowing through the first turbine portion 210 is at a high pressure relative to fluid flowing through the second turbine portion 220. Each turbine portion 210, 220 includes multiple sets of rotors 212, 222, with each set of rotors 212, 222 being a stage of the corresponding turbine portion 210, 220.

The rotors 212 in the first turbine portion 210 are connected to a first shaft 230, and drive the first shaft 230 to rotate. Similarly, the rotors 222 in the second turbine portion 220 are connected to a second shaft 240, and drive the second shaft 240 to rotate. Furthermore, as in Figures 1, 2 and 2A, the transition duct 202 does not include flow correcting vanes.

Unlike the example of Figure 2, the second turbine portion 220 in the example of Figure 3 is split by the presence of the static support structure 270, and is referred to as a split turbine portion. The second turbine portion 220 is split between a group of rotors 222' fore of the static support structure 270 that are mechanically fastened or bonded to shaft 240 and a group of rotors 222 aft of the static support structure. Each of the rotors 222 in the group of rotors aft of the static support structure 270 are connected via one or more mechanically fastened or bonded joints in disk arms 242, and a single rotor 222 is connected to the second shaft 240.

Each rotor 222' in the group of rotors fore of the static support structure 270 is connected to the second shaft 240 via a connection hub 244. The connection hub 244 also includes provisions for an intershaft or 'piggy back" bearing arrangement 250 where the radial load from the first turbine 201 is reacted by the attachment hub 244 and shaft 240 In example engines where more than one stage of rotors 222' is fore of the static support structure 270, each of the rotors 222' can be connected via a connection similar to the connection 242 connecting the rotors 222 aft of the static support structure 270.

The static support structure 270 includes an inward portion 272 disposed radially inward of the flowpath through the second turbine portion 220 and an outward portion 274 with local intermittently spaced airfoil shaped struts that passes through the flowpath of the second turbine portion 220. Airfoil shaped struts act to de-swirl the flow leaving airfoil in turbine 220' as it enters the first airfoil row in turbine 220. The static support structure 270 is connected to an outer diameter of the flowpath at a radially outermost edge 276 of the static support structure 270, and to a bearing 278 at a radially innermost edge 273 of the static support structure 270. Because support structure 270 is located aft of the first rotor 222' extracting work from the combusted gas products, the operating environment temperature and pressure are less severe than the conditions at the entrance of the vaneless turbine 222'. This results in increased design flexibility in the use of lower temperature materials for support structure 270. This also reduces the challenges associated with thermal management of fluids and services for bearing locations 250 and 278 that traverse the flowpath through radial struts in 274.

Positioned at a flowpath exit 224 of the turbine engine is a turbine exhaust case 260. The turbine exhaust case 260 directs exhaust gasses from the turbine section 200 away from the gas turbine engine 20. In the example of Figure 3, the packaging of turbines 210 and 220 is such that the spacing of bearing arrangements 250 and 278 result in systems rotor dynamics that do not require an additional bearing support in the turbine exhaust case 260. The results in a significantly smaller, lighter and simpler turbine exhaust case 260 with accompanying system level benefits.

The first turbine portion 210 rotates about an engine axis in a first direction, while the second turbine portion 220 rotates in the opposite direction. Figure 3A illustrates a cross sectional view of the last rotor stage 212 of the first turbine portion 210 and the first rotor stage 222' of the second turbine portion 220. One of skill in the art, having the benefit of this disclosure, will understand that the airfoil profiles 214 of the rotors 212 in the first turbine portion 210 are opposite the airfoil profiles 226 of the rotors 222 in the second turbine portion 220. The opposing airfoil profiles 214, 226 is the feature that drives the turbine portions 210, 220 to counter rotate.

As with the example of Figure 2, there is a small elevation difference between the first turbine portion 210 and the second turbine portion 220 requiring a transitional duct 202. The small elevation distance, however, ensures that the transitional duct 202 is sufficiently short that no flow correcting vanes are required within the transitional duct 202. As such, the illustrated turbine section 200 of Figure 3 is a vaneless turbine section 200.

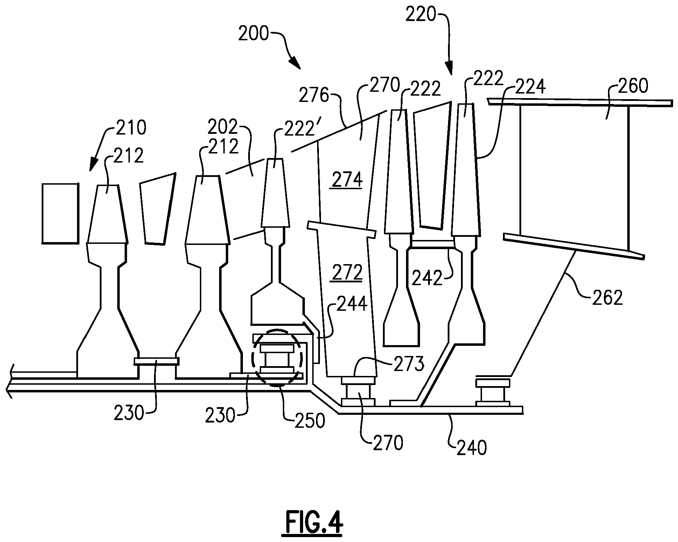

With continued reference to Figures 3 and 3A, and with like numerals indicating like elements, Figure 4 illustrates an alternate example gas turbine engine including all the features of Figures 3 and 3A with an alteration to the turbine exhaust case 260. In the example of Figure 4, the turbine exhaust case 260 includes an additional structural support in the form of a structural bearing support 262 and a bearing 264. In some example gas turbine engines, the combined turbine 210 and 220 may be longer or heavier than in the example of Figure 3 as a result of the selected engine cycle and the number of turbine stages required to extract the desired work in an efficient manner. The increased length or weight results in engine system rotor dynamics that necessitate the addition of a rear bearing 264, the additional structural supports illustrated in the example of Figure 4 can be required.

While illustrated and described herein as a two spool gas turbine engine including only a high pressure turbine section and a low pressure turbine section, it is understood that the same vaneless transition duct and static support structures described above can be applied equally to a transition duct between an intermediate turbine and a low pressure turbine or high and intermediate turbine in a three spool gas turbine engine.

The following claims should be studied to determine the true scope and content of this invention.

## Claims

1. A gas turbine engine (20) comprising:
a compressor portion (24);
a combustor (26) fluidly connected to the compressor portion;
a turbine section (100) fluidly connected to the combustor (26), wherein the turbine section (100) includes at least a first turbine portion (110) and a second turbine portion (120) connected to the first turbine portion (110) via a transition duct (102), fluid in the second turbine portion (120) having a lower pressure than fluid in the first turbine portion (110);
a fan drive gear system (48) connecting the second turbine portion to a fan;
wherein the first turbine portion (110; 210) drives a first shaft (130; 230) and the second turbine portion (120; 220) drives a second shaft (140; 240), and wherein the first shaft (130; 230) is supported relative to the second shaft (140; 240) via a piggyback intershaft bearing arrangement in which a bearing (150) is supported radially between two revolving races relative to an axis of the engine;
the gas turbine engine **characterized in that** the transition duct lacks flow correcting vanes, the first turbine portion and the second turbine portion are counter rotating turbine portions, and **in that** the second turbine portion includes exactly three turbine stages.

2. The gas turbine engine of claim 1, wherein a first of the revolving races is mechanically connected to the first shaft.

3. The gas turbine engine of claim 1 or 2, wherein a second of the revolving races is mechanically connected to the second shaft.

4. The gas turbine engine of any preceding claim, wherein a static support structure (270) is disposed between said first stage of the second turbine portion (120) and a second stage of the second turbine portion (120).

5. The gas turbine engine of the preceding claim, wherein the static support structure (270) is directly connected to an outer diameter of the primary flowpath and wherein the static support structure (270) is connected to the second shaft (140; 240) via a bearing (278).

6. The gas turbine engine of any preceding claim, further comprising a turbine exhaust case (160; 260) connected to a fluid exit of the second turbine portion (120; 220).

7. The gas turbine engine of claim 6, wherein the turbine exhaust case (160; 260) is supported relative to the second shaft (240) via at least a first support wall and a bearing (160).

## Patentansprüche

1. Gasturbinentriebwerk (20), das Folgendes umfasst:
einen Kompressorabschnitt (24);
eine Brennkammer (26), die fluidisch mit dem Kompressorabschnitt verbunden ist;
eine Turbinensektion (100), die fluidisch mit der Brennkammer (26) verbunden ist, wobei die Turbinensektion (100) mindestens einen ersten Turbinenabschnitt (110) und einen zweiten Turbinenabschnitt (120) beinhaltet, der mit dem ersten Turbinenabschnitt (110) über einen Zwischenkanal (102) verbunden ist, wobei Fluid im zweiten Turbinenabschnitt (120) einen geringeren Druck aufweist als Fluid im ersten Turbinenabschnitt (110);
ein Gebläseantriebsgetriebesystem (48), das den zweiten Turbinenabschnitt mit einem Gebläse verbindet;
wobei der erste Turbinenabschnitt (110; 210) eine erste Welle (130; 230) antreibt und der zweite Turbinenabschnitt (120; 220) eine zweite Welle (140; 240) antreibt, und wobei die erste Welle (130; 230) relativ zur zweiten Welle (140; 240) über eine Huckepack-Zwischenwellenlagerungsanordnung gestützt wird, in der eine Lagerung (150) radial zwischen zwei umlaufenden Laufringen relativ zu einer Achse des Triebwerks gestützt wird;
wobei das Gasturbinentriebwerk **dadurch gekennzeichnet ist, dass** der Zwischenkanal keine Strömungskorrekturschaufeln aufweist, der erste Turbinenabschnitt und der zweite Turbinenabschnitt gegenläufige Turbinenabschnitte sind, und dadurch, dass der zweite Turbinenabschnitt genau drei Turbinenstufen beinhaltet.

2. Gasturbinentriebwerk nach Anspruch 1, wobei ein erster der umlaufenden Laufringe mechanisch mit der ersten Welle verbunden ist.

3. Gasturbinentriebwerk nach Anspruch 1 oder 2, wobei ein zweiter der umlaufenden Laufringe mechanisch mit der zweiten Welle verbunden ist.

4. Gasturbinentriebwerk nach einem der vorhergehenden Ansprüche, wobei eine statische Stützstruktur (270) zwischen der ersten Stufe des zweiten Turbinenabschnitts (120) und einer zweiten Stufe des zweiten Turbinenabschnitts (120) angeordnet ist.

5. Gasturbinentriebwerk nach einem der vorhergehenden Ansprüche, wobei die statische Stützstruktur (270) direkt mit einem Außendurchmesser des primären Strömungspfades verbunden ist, und wobei die statische Stützstruktur (270) über eine Lagerung (278) mit der zweiten Welle (140; 240) verbunden ist.

6. Gasturbinentriebwerk nach einem der vorhergehenden Ansprüche, das ferner ein Turbinenabdampfgehäuse (160; 260) umfasst, das mit einem Fluidausgang des zweiten Turbinenabschnitts (120; 220) verbunden ist.

7. Gastturbinenmotor nach Anspruch 6, wobei das Turbinenabdampfgehäuse (160; 260) relativ zur zweiten Welle (240) über mindestens eine Stützwand und eine Lagerung (160) gestützt wird.

## Revendications

1. Moteur à turbine à gaz (20) comprenant :
une partie de compresseur (24) ;
un chambre de combustion (26) reliée de manière fluidique à la partie de compresseur ;
une section de turbine (100) reliée de manière fluidique à la chambre de combustion (26), dans lequel la section de turbine (100) comporte au moins une première partie de turbine (110) et une seconde partie de turbine (120) reliée à la première partie de turbine (110) par l'intermédiaire d'un conduit de transition (102), un fluide dans la seconde partie de turbine (120) ayant une pression inférieure à un fluide dans la première partie de turbine (110) ;
un système d'engrenage d'entraînement de ventilateur (48) reliant la seconde partie de turbine à un ventilateur ;
dans lequel la première partie de turbine (110 ; 210) entraîne un premier arbre (130 ; 230) et la seconde partie de turbine (120 ; 220) entraîne un second arbre (140 ; 240), et dans lequel le premier arbre (130 ; 230) est supporté par rapport au second arbre (140 ; 240) par l'intermédiaire d'un ensemble palier inter-arbres superposable dans lequel un palier (150) est supporté radialement entre deux pistes rotatives par rapport à un axe du moteur ;
le moteur à turbine à gaz étant **caractérisé en ce que** le conduit de transition ne possède pas d'ailettes de correction d'écoulement, la première partie de turbine et la seconde partie de turbine sont des parties de turbine contrarotatives, et **en ce que** la seconde partie de turbine comporte exactement trois étages de turbine.

2. Moteur à turbine à gaz selon la revendication 1, dans lequel une première des pistes rotatives est reliée mécaniquement au premier arbre.

3. Moteur à turbine à gaz selon la revendication 1 ou 2, dans lequel une seconde des pistes rotatives est reliée mécaniquement au second arbre.

4. Moteur à turbine à gaz selon une quelconque revendication précédente, dans lequel une structure de support statique (270) est disposée entre ledit premier étage de la seconde partie de turbine (120) et un second étage de la seconde partie de turbine (120).

5. Moteur à turbine à gaz selon la revendication précédente, dans lequel la structure de support statique (270) est directement reliée à un diamètre externe du chemin d'écoulement principal et dans lequel la structure de support statique (270) est reliée au second arbre (140 ; 240) par l'intermédiaire d'un palier (278).

6. Moteur à turbine à gaz selon une quelconque revendication précédente, comprenant en outre un carter d'échappement de turbine (160 ; 260) relié à une sortie de fluide de la seconde partie de turbine (120 ; 220).

7. Moteur à turbine à gaz selon la revendication 6, dans lequel le carter d'échappement de turbine (160 ; 260) est supporté par rapport au second arbre (240) par l'intermédiaire d'au moins une première paroi de support et d'un palier (160).
